# EUROPEAN PATENT APPLICATION

(11) **EP 1 261 231 A1**
(43) Date of publication of application: **27.11.2002**
(21) Application number: 02011207.4
(22) Date of filing: 21.05.2002
(51) Int. Cl.: H04Q 11/04, H04L 12/28

(54) **Network connection recovery method and system**

(30) Priority: 21.05.2001 JP 2001151339
(71) Applicant: NEC CORPORATION, Tokyo (JP)
(72) Inventor: Kikuta, Keiichi, Minato-ku, Tokyo (JP); Shoda, Shigeo, Nec Communication Sys., Ltd., Tokyo (JP); Okamura, Takeshi, Nec Communication Sys., Ltd., Tokyo (JP)
(74) Representative: Betten & Resch

(57) **Abstract**

When a terminal device accesses through a communication network for the first time, a server device generates an identifier for use in reconnection of the terminal device with the communication network, and returns the identifier to the terminal device. If a connection between the terminal device and communication network is broken by a fault, the server device authenticates the terminal device using the identifier transmitted from the terminal device to recover said connection with another terminal device to which said terminal device had been connected immediately before the terminal device was disconnected from the communication network.

## Description

### BACKGROUND OF THE INVENTION

### 1. Field of the Invention:

The present invention relates to a network connection recovery method and system for recovering a connection established between terminal devices through a communication network such as the Internet when the connection is disconnected by a fault.

### 2. Description of the Related Art:

In recent years, a variety of services have been increasingly provided utilizing communication networks such as the Internet. In such a service utilizing a communication network, a connection between a terminal device used by a user, who is a receiver of the service, and the communication network may be sometimes disconnected unexpectedly by some fault. For example, when an information processing device such as a personal computer is connected to the Internet utilizing a telephone line, a modem incorporated in the information processing device for data communication will forcedly break the connection to the telephone line due to a sound quality deteriorated by some cause such as noise.

When a terminal device, i.e., an information processing device is connected to the Internet through a telephone line via dialup, the terminal device is given an IP address which is different each time the terminal device is connected to the Internet. This is because a provider which provides a connection service to the Internet can assign only a limited number of IP addresses to users. In addition, if the same IP address is assigned to the same user each time, a fraudulent access can be made, aiming at this user, so that the IP address is changed each time to produce an additional effect of improving the security.

Therefore, once a terminal device of a user is disconnected from a service provider which provides arbitrary services utilizing a communication network, even if the same user again attempts to access, the user is treated as a newly accessed user due to the inability of the service provider to determine whether or not the accessed terminal device is owned by the user who has previously communicated. In such an event, the user is required to again go through, from the beginning, a procedure similar to that performed when the user first accessed the same service provider.

Specifically, for receiving the same service, after again connecting to the Internet via dialup and accessing a home page or the like of a service provider, the user must again receive a service, for example, which has been received halfway, from the beginning. In addition, since initial processing such as transmission of ID and password must be repeated again, laborious operations must be repeated for reconnection with an information processing device of the service provider.

### SUMMARY OF THE INVENTION

It is therefore an object of the present invention to provide a network connection recovery method and system which are capable of connecting again a terminal device with which communications have been made before disconnection, without burdening the user with laborious operations, even if a connection with a line (communication network) is broken by a fault.

To achieve the above object, in the present invention, an identifier for use in reconnection of a terminal device with a communication network is generated when the terminal device makes the first access, and transmitted to the terminal device. If the terminal device is disconnected from the communication network, the terminal device is instructed to transmit the identifier after reconnection with the communication network, such that the terminal device is authenticated using the transmitted identifier, followed by recovery of a connection with another terminal device which had been connected immediately before the terminal device was disconnected from the communication network.

By performing the foregoing processing, even if a fault causes disconnection of the terminal device from a line, the user can again establish a connection to an information processing device with which the user has communicated before the disconnection, without being burdened with the laborious operations. In addition, since the procedure for the reconnection is simple, the connection is rapidly established again to minimize interruption of service.

Particularly, since the identifier including information limited in the number of available times or a period available for use or both is used during the reconnection procedure, an unauthorized access to the user is prevented so that another person deceiving the user cannot receive any provided service, thereby making it possible to improve the security level of the system.

Also, while a plurality of terminal devices are connected through the communication network, a server device exchanges with each terminal device a mutual monitoring instruction message for monitoring a connecting state, and a mutual monitoring result message which is a response to the mutual monitoring instruction message. By performing such processing, the server device can readily detect the occurrence of a fault, thus preventing such a problem that the terminal device is charged even during disconnection from the communication network, as an example. In addition, even if a terminal device is disconnected from the communication network, an actually connected time of the user can be correctly measured to permit the provision of alternative services, in the event of disconnection, based on a contract previously made between the service provider and the user, to remove anxiety of the user and improve satisfaction of the user.

The above and other objects, features and advantages of the present invention will become apparent from the following description with reference to the accompanying drawings which illustrate examples of the present invention.

### BRIEF DESCRIPTION OF THE DRAWINGS

Fig. 1 is a block diagram illustrating an exemplary configuration of an education system which embodies an exemplary network connection recovery system of the present invention;
Fig. 2 is a block diagram illustrating an exemplary configuration of a call control server device shown in Fig. 1;
Fig. 3 is a sequence diagram showing a processing procedure until a teacher terminal device and a member terminal device shown in Fig. 1 are normally started;
Fig. 4 is a sequence diagram showing a processing procedure until a lesson is normally started and terminated utilizing the education system illustrated in Fig. 1;
Fig. 5 is a sequence diagram showing a processing procedure when a member terminal device is disconnected from a communication network, for showing a network connection recovery method according to the present invention; and,
Fig. 6 is a sequence diagram showing a processing procedure when a teacher terminal device is disconnected from a communication terminal, for showing the network connection recovery method according to the present invention.

### DETAILED DESCRIPTION OF THE PREFERRED EMBODIMENT

In the following, a network connection recovery method and system according to the present invention will be described in connection with an education system, taken as an example, in which terminal devices owned by a teacher and students are interconnected through a communication network such as the Internet to hold a class (hereinafter sometimes called the "lesson") utilizing previously provided teaching materials while the teacher and students are communicating with one another through voice, chat function and the like. It should be noted however that the network connection recovery method of the present invention is applicable not only to the education system described below but also to any system which comprises a server device and terminal devices configured to bi-directionally communicate information between the server device and any terminal device or between any terminal devices utilizing a communication network while ensuring a predetermined security level, such as a sales system for selling, for example, goods, music, video, information, or the like.

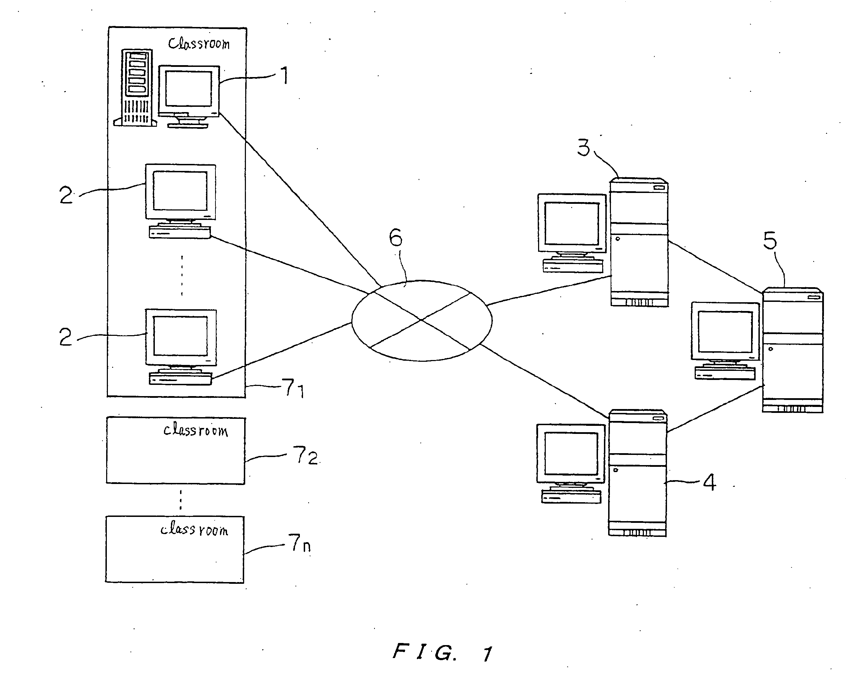

As illustrated in Fig. 1, the education system comprises teacher terminal device 1 which is a terminal device for use by a teacher; member terminal device 2 which is a terminal device for use by a student; Web server device 3 for receiving a user (teacher terminal device 1 and member terminal device 2) which accesses through communication network 6 such as the Internet; call control server device 4 for controlling connection/disconnection of teacher terminal device 1 with member terminal device 2, and managing a connecting state; and DB server device 5 for managing information on students and teacher or staff responsible for managing the education system.

Web server device 3, call control server device 4, and DB server device 5 may be information processing devices such as a workstation, a server computer, and the like, while teacher terminal device 1 and member terminal device 2 may be information processing devices such as a personal computer and the like which has a function of connecting to communication network 6. Web server device 3, call control server device 4, and DB server device 5 may be managed by a service provider responsible for the management of the education system, or a third party which is commissioned by the service provider to operate the education system.

Teacher terminal device 1 and member terminal device 2 are connected to communication network 6, respectively, by connecting via dialup to a remote access server device, not shown, managed by a provider or the like, and connected to Web server device 3 and call control server device 4 or interconnected through the remote access server device. Alternatively, teacher terminal device 1 and member terminal device 2 may be connected to communication network 6 through LAN (Local Area Network) built by a service provider or the like.

As illustrated in Fig. 1, a plurality (for example, four at maximum) of member terminal devices 2 can be connected to single teacher terminal device 1 through communication network 6. This single teacher terminal device 1 and at least one member terminal device 2 connected to teacher terminal device 1 constitute each classroom 7₁ - 7ₙ (n is a natural number). The number of member terminal devices 2 connectable to teacher terminal device 1 is limited by a transmission bandwidth of communication network 6, so that a larger number of member terminal devices 2 can be connected to teacher terminal device 1 as communication network 6 provides a wider transmission bandwidth.

Teacher terminal device 1 and member terminal devices 2 each comprise a driving unit for reading information from a CD-ROM which records contents of teaching materials previously provided for students and teacher. A recording medium which records programs and the like for member terminal device 2 also records a program for students for implementing an audio communication function, a chat function, a display function necessary for holding a lesson, and the like. A recording medium for teacher terminal device 1 also records, in addition to functions similar to those provided by the program for students, a program for a teacher for implementing a function for controlling a display screen of member terminal device 2 (displaying a moving image/still image recorded on a CD-ROM or the like, specifying a member to speak, and the like), and a function of notifying the start and end of a lesson (hereinafter the programs for students and teacher are called the "lesson applications"). The lesson applications may be recorded on the CD-ROM or the like together with the contents of teaching materials. In addition, the contents of teaching materials may be recorded not only on a CD-ROM but also on any other recording medium such as a magnetic disk, a semiconductor memory and the like. Furthermore, the contents of teaching materials and lesson applications may be downloaded from Web server 3 or the like to teacher terminal device 1 and member terminal devices 2 through communication network 6. Alternatively, the contents of teaching materials may be delivered from Web server device 3 or the like so that each terminal device can display the contents in real time.

The teacher and students each connect to communication network 6 via dialup using their respective terminal devices, access Web server device 3, and acquire predetermined information files from Web server 3 after authentication, confirmation of a reserved lesson, and the like. Then, the teacher and students utilize the information file for interconnection to hold a lesson such as English conversation using the contents of teaching materials and the lesson applications recorded on their CD-ROMs. The information file includes IP addresses given to member terminal devices 2 and teacher terminal device 1, a simple log-in password for use in the event of a fault which causes disconnection from communication network 6, information on the teacher and students who participate in the lesson, and the like.

The simple log-in password is a password (identifier) which is limited in the number of times available for use, or a period available for use, or both. For example, it is a one-time password which is used only when member terminal device 2 or teacher terminal device 1 is disconnected from communication network 6 during a lesson and which is altered for each lesson.

Such a one-time password is optimal for the education system because the system use time is limited to lessons. The one-time password is less susceptible to abuse due to its validity limited only during lesson times. Even if another person who acquired the password attempts an access while the assignee of the password is normally taking a lesson, this access can be rejected by the system. Stated another way, a successful access to the education system by another person is limited only when the person illegally acquires the password during a short time in which member terminal device 2, disconnected from communication network 6 due to any fault, is attempting to connect again to the remote access server device via dialup, and can access the education system using the simple log-in password available only for a corresponding lesson.

It is therefore possible to not only prevent a fraudulent access to a user but also prevent another person who deceives the user from receiving a service (receiving a lesson without permission).

Upon receipt of a simple log-in password and a user ID given at the time of user registration from member terminal device 2 or teacher terminal device 1, Web server device 3 references the simple log-in password and user ID to call control server device 4. Call control server device 4 authenticates the user with the simple log-in password and user ID, and performs processing required for reconnection between teacher terminal device 1 and member terminal device 2. In this event, the user is only required to connect to communication network 6 via dialup, resulting in transmission of the simple log-in password and user ID from terminal device 2 or 1 to Web server device 3 and a connection established again between teacher terminal device 1 and member terminal device 2 to resume an interrupted lesson. In this way, even if a fault causes disconnection of the terminal device from a line, the user can again establish a connection with the terminal device with which the user has communicated before the disconnection, without being burdened with the laborious operations, thereby providing a quite usable system for the user. In addition, since the procedure for reconnection is simple, the connection is rapidly established again to minimize interruption of service. Particularly, since the identifier including information (simple log-in password) limited in the number of available times or a period available for use or both is used during the reconnection, an illegal access to the user is prevented so that another person deceiving the user cannot receive any provided service, thereby making it possible to improve the security level of the system.

Web server device 3 is a device for communicating authentication information and the like when a user (student or teacher) intending to participate in a lesson accesses using a terminal device. The user goes through, for example, user registration, user authentication, reservation of lesson, confirmation of contents, and the like, through Web server device 3. Web server device 3 acquires an IP address for the terminal device of the authenticated user from an HTTP signal of the TCP/IP protocol transmitted from the terminal device. Web server device 3 is also responsible for control to download an IP address of each terminal device, the aforementioned information file, and the like, required to start a lesson application, to teacher terminal device 1 and member terminal devices 2.

Call control server device 4 is responsible for processing for interconnecting teacher terminal device 1 and member terminal devices 2 upon starting a lesson, and processing for disconnecting these terminals upon terminating the lesson. Call control server device 4 also transmits the attendance and the like of each user (student or teacher) to DB server device 5 for management. Further, during a lesson, call control server device 4 exchanges mutual monitoring instruction/result messages with teacher terminal device 1 and member terminal devices 2 to monitor a connecting state of each terminal device, and transmits the monitoring results to DB server device 5. Call control server device 4 is also responsible for processing for reconnection if a fault causes disconnection. During the monitoring of respective terminal devices for their connecting states, for example, if a terminal device does not respond to the mutual monitoring instruction message transmitted thereto by sending the mutual monitoring result message within a predetermined time, and/or if a terminal device does not respond by sending the mutual monitoring result message although call control server device 4 has transmitted the mutual monitoring instruction message a predetermined number of times, call control server device 4 determines that a connection between the terminal device and communication network 6 has been broken by a fault.

DB server device 5 manages information on respective students, teachers, and staff responsible for management of the education system (user ID, password, other personal information, and the like), and performs processing involved in authentication of user and processing involved in confirmation of reserved lessons in response to authentication and confirmation instructions from Web server device 3 and call control server device 4. DB server device 5 also manages schedules of teachers and students, a lesson schedule such as a timetable for each classroom, records the attendance, connecting state and the like for each user (student or teacher) during a lesson, and performs processing involved in charging for each student each time one lesson is over.

While Fig. 1 illustrates the configuration of the education system which has three server devices, i.e., Web server device 3, call control server device 4 and DB server device 5, the functions of these server devices may be implemented by one, two, or four or more server devices.

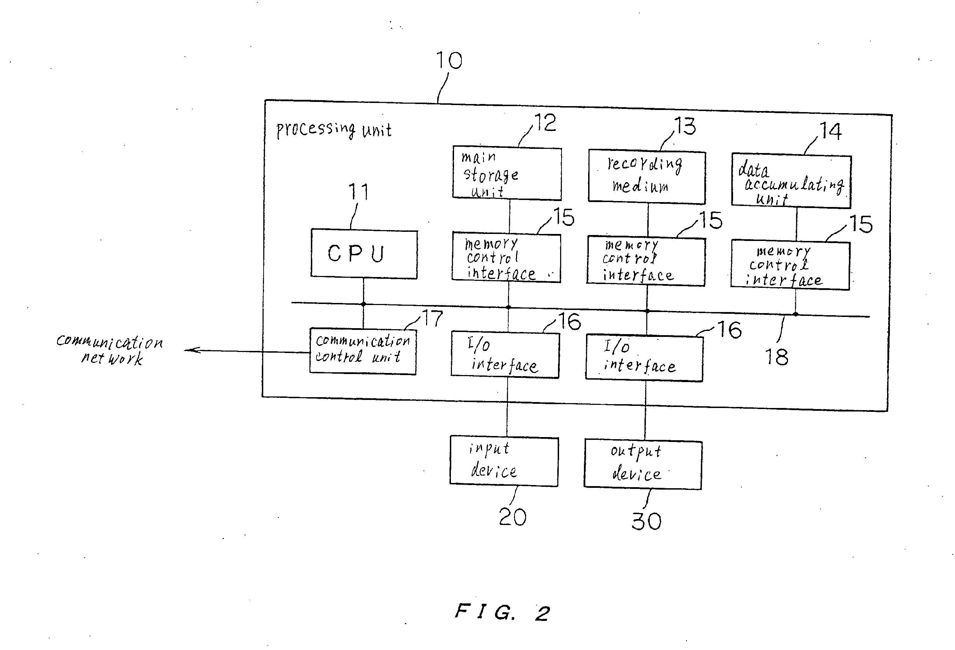

As illustrated in Fig. 2, call control server device 4 comprises processing unit 10 for executing predetermined processing in accordance with a program; input device 20 for entering commands, information and the like to processing unit 10; and output device 30 for monitoring the result of processing executed by processing unit 10.

Processing unit 10 comprises CPU (central processing unit) 11; main storage unit 12 for temporarily storing information required for processing of CPU 11; recording medium 13 which records a control program for instructing CPU 11 to control connection/disconnection of teacher terminal device 1 and member terminal devices 2, and manage connecting states; data accumulating unit 14 for recording contents of information file and the like which are transmitted to teacher terminal device 1 and member terminal devices 2; memory control interface 15 for controlling data transfers among main storage unit 12, recording medium 13 and data accumulating unit 14; I/O interface 16 for interfacing input device 20 with output device 30; and communication control unit 17 which is an interface for controlling communications with teacher terminal device 1 and member terminal devices 2, or with Web server device 3 and DB server device 5. These components are interconnected through bus 18.

Processing unit 10 executes processing of call control server device 4, described below, in accordance with the control program recorded on recording medium 13. Recording medium 13 may be a magnetic disk, a semiconductor memory, an optical disk, or any other recording medium.

Web server device 3 and DB server device 5 are respectively similar in configuration to call control server device 4 except that different programs and data are recorded on recording media and in data accumulating units. Likewise, teacher terminal device 1 and member terminal device 2 are respectively similar in configuration to call control server device 4 except that different programs and data are recorded on recording media and in data accumulating units and these devices comprise a driving unit for driving a CD-ROM or the like which records contents of teaching materials, as described above. Therefore, description on the configuration of these devices are omitted here.

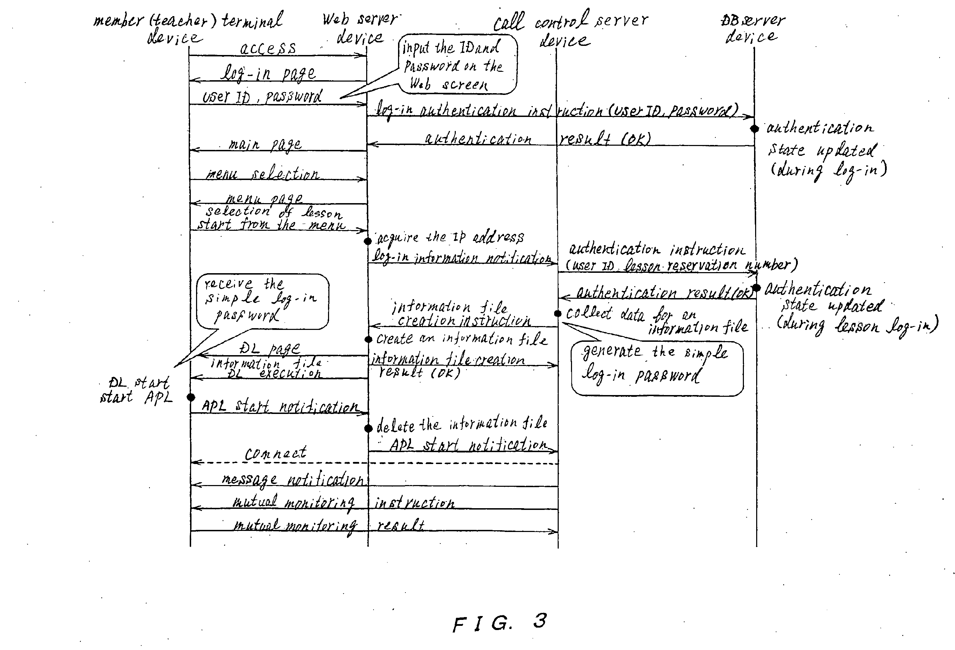

Next, a network connection recovery method according to the present invention will be described with reference to Figs. 3 - 6.

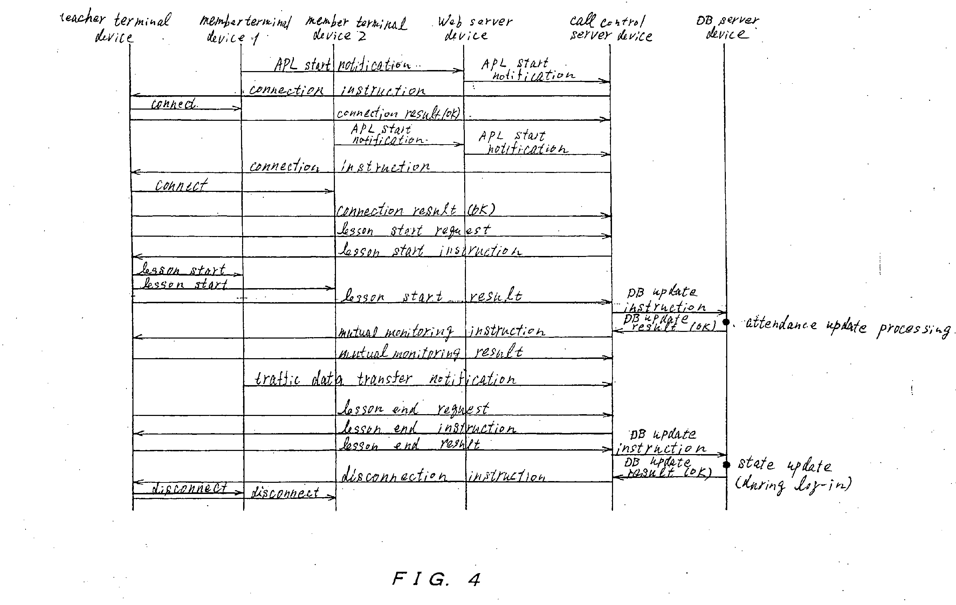

Referring first to Figs. 3, and 4, description will be made on processing which is performed when teacher terminal device 1 and member terminal devices 2 are correctly started to begin a lesson, and terminate the lesson.

As shown in Fig. 3, as a student (member) connects to communication network 6 via dialup using member terminal device 2, this member terminal device 2 is given an IP address from the aforementioned remote access server device, and connected to communication network 6. Then, the IP address is returned to member terminal device 2.

Next, as the student accesses Web server device 3 from member terminal device 2 utilizing browser software or the like, Web server device 3 returns data on a log-in page to member terminal device 2 for prompting the student to return authentication information such as a user ID and a password, which were assigned to the student at the time of member registration, in order to confirm whether or not the accessing member terminal device 2 is owned by a registered member.

As the student enters the ID, password and the like into member terminal device 2 following instructions on the log-in page screen (WEB screen), member terminal device 2 transmits the authentication information including the entered user ID and password to Web server device 3.

Web server device 3 transmits a log-in authentication instruction to DB server device 5 for instructing the same to confirm whether or not the transmitted authentication information and accessing member terminal device 2 belong to a member. DB server device 5 performs processing involved in the authentication with reference to member information accumulated in the data accumulating unit, and returns the result of authentication (here, authentication result (OK)) to Web server device 3. DB server device 5 also sets member information of accessing member terminal device 2 to "state updated" (during log-in).

Web server device 3, upon confirming that accessing member terminal device 2 is owned by a member, returns data on a main page to member terminal device 2 for prompting the student to select an item from a menu which includes member registration, reservation for lesson, confirmation of schedule, lesson start, and the like.

As the student selects an item from the menu following instructions on the main page screen displayed on member terminal device 2, member terminal device 2 transmits the result of selection (menu selection) to Web server device 3.

Web server device 3 receives the selection result transmitted from member terminal device 2, and returns data on a menu page corresponding to the selection result to member terminal device 2. Assume herein that the students have selected lesson start from the menu following instructions on the menu page screen displayed on member terminal device 2, and entered the user ID, lesson reservation information, and the like. Member terminal device 2 transmits the result of selection made by the student (selection of lesson start from the menu) to Web server device 3.

Web server device 3 acquires the IP address of member terminal device 2 from an HTTP signal of the selection result, and transmits to call control server device 4 a reservation number of a lesson selected by the student, transmitted from member terminal device 2, and a log-in information notification indicating that the student has logged in to the system.

Call control server device 4 transmits to DB server device 5 the lesson reservation number received from Web server device 3, associated user ID, and an authentication instruction for confirming the content of the reservation.

DB server device 5 confirms the lesson selected by the student from the received user ID, reservation number and the like (authentication), and returns the result of authentication (here, authentication result (OK)) to call control server device 4. DB server device 5 also sets the member information of accessing member terminal device 2 to "state updated" (during lesson log-in).

After confirming the contents of the lesson, call control server device 4 generates the aforementioned simple log-in password which is recorded in the data accumulating unit, collects data required for generating an information file from DB server device 5, and transmits these data and an information file creation instruction to Web server device 3.

Web server device 3 creates an information file using the data transmitted from call control server device 4, transmits to member terminal device 2 data on a DL page for downloading the created information file to member terminal device 2, and notifies call control server device 4 that the information file has been created (here, information file creation result (OK)). Then, in response to a download start (DL start) instruction from member terminal device 2, Web server device 3 transmits the information file to member terminal device 2 (information file DL execution).

Member terminal device 2 starts a lesson application (APL) using the downloaded information file, and returns a notification of the successful start of the application (APL start notification) to Web server device 3.

Upon receipt of the successful lesson application start notification from member terminal device 2, Web server device 3 deletes the information file for member terminal device 2 held therein, and transmits the successful lesson application start notification (APL start notification) to call control server device 4.

Call control server device 4 accesses (connects) member terminal device 2 in which the lesson application has been started, and returns application start notification confirmation OK to member terminal device 2 (message notification). Subsequently, call control server device 4 starts monitoring for a fault by exchanging the mutual monitoring instruction/result messages every predetermined time for confirming a connecting state. Member terminal device 2 waits in this state until it is connected to teacher terminal device 1.

While the foregoing procedure shows the processing until member terminal device 2 starts the lesson application, a similar procedure is taken when teacher terminal device 1 starts a lesson application.

As shown in Fig. 4, as a lesson application is started in teacher terminal device 1, teacher terminal device 1 returns a notification of successful application start (APL start notification) to Web server device 3. Web server device 4 transmits the application start notification to call control server device 4.

Upon receipt of the notification of successful application start from teacher terminal device 1, control server device 4 transmits a connection instruction message to teacher terminal device 1 to connect to member terminal devices 2 (member terminal 1 and member terminal 2 in Fig. 4) in which the application has been started.

Each time teacher terminal device 1 receives the connection instruction message from call control server device 4, teacher terminal device 1 connects to member terminal device 2 which requests a lesson through communication network 6 using an information file, and returns the result of connection (here, connection result (OK)) to call control server device 4. While Fig. 4 shows a procedure for first connecting to a first member terminal device (member terminal 1) and then to a second member terminal device (member terminal 2), the order of connection is arbitrary because call control server device 4 transmits a connection instruction message to teacher terminal device 1 each time another member participates in the lesson.

At the time all students are present for taking a lesson (two in Fig. 4), the teacher transmits a lesson start request from teacher terminal device 1 to call control server device 4. In response to the lesson start request from teacher terminal device 1, call control server device 4 returns a lesson start instruction message to teacher terminal device 1.

Upon receipt of the lesson start instruction message, the teacher transmits a lesson start notification to respective member terminal devices 2 of students who are going to take the lesson, for example, by depressing a lesson start button on a screen displayed on teacher terminal device 1 by the lesson application. The teacher also transmits a lesson start result including data such as the attendance at the beginning of the lesson, and the like to call control server device 4.

Call control server device 4 transfers the lesson start result and data associated therewith, received from teacher terminal device 1, to DB server device 5 to transmit member information update instruction message. DB server device 5 updates the member information and the like accumulated in the data accumulating unit based on the data transferred from call control server device 4 (attendance update processing), and returns the result of update (here, DB update result (OK)) to call control server device 4.

Upon completion of the update in the member information made by DB server device 5, call control server device 4 exchanges the mutual monitoring instruction/result messages between all terminal devices every predetermined time for monitoring connecting states. Call control server device 4 also instructs each terminal device to periodically transfer data on the communication quality and connecting circumstance (traffic data) (traffic data transfer notification). The traffic data is collected after reception of the connection result (OK) transmitted to call control server device 4 when teacher terminal device 1 connects to member terminal device 2.

Upon completion of the lesson, the teacher transmits a lesson end request from teacher terminal device 1 to call control server device 4. Call control server device 4 returns a lesson end instruction message in response to the lesson end request from teacher terminal device 1. Upon receipt of the lesson end instruction, the teacher transmits a lesson end notification to respective students who have taken the lesson, for example, by depressing a lesson end button on the screen of teacher terminal device 1 displayed by the lesson application, and simultaneously transmits a lesson end result to call control server device 4.

Call control server device 4 transfers the lesson end result received from teacher terminal device 1 to DB server device 5 to transmit a member information update instruction message. DB server device 5 updates the member information and the like accumulated in the data accumulating unit based on the data transferred from call control server device 4 (state updated (during log-in)), and returns the result of update (here, DB update result (OK)) to call control server device 4.

Upon terminating the update by DB server device 4, call control server device 4 transmits a disconnection instruction to teacher terminal device 1 to disconnect member terminal devices 2. In response to the disconnection instruction, teacher terminal device 1 disconnects each member terminal device 2.

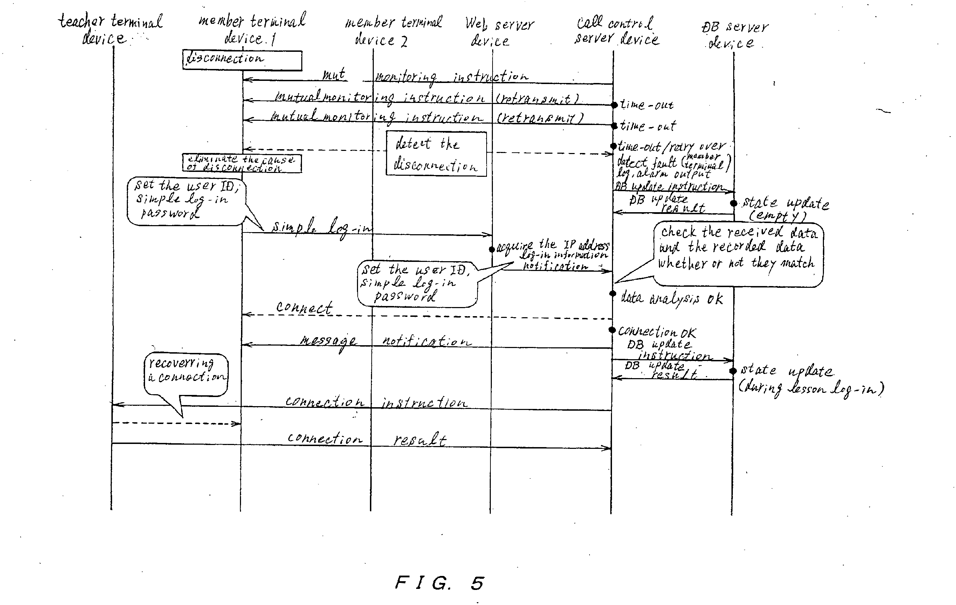

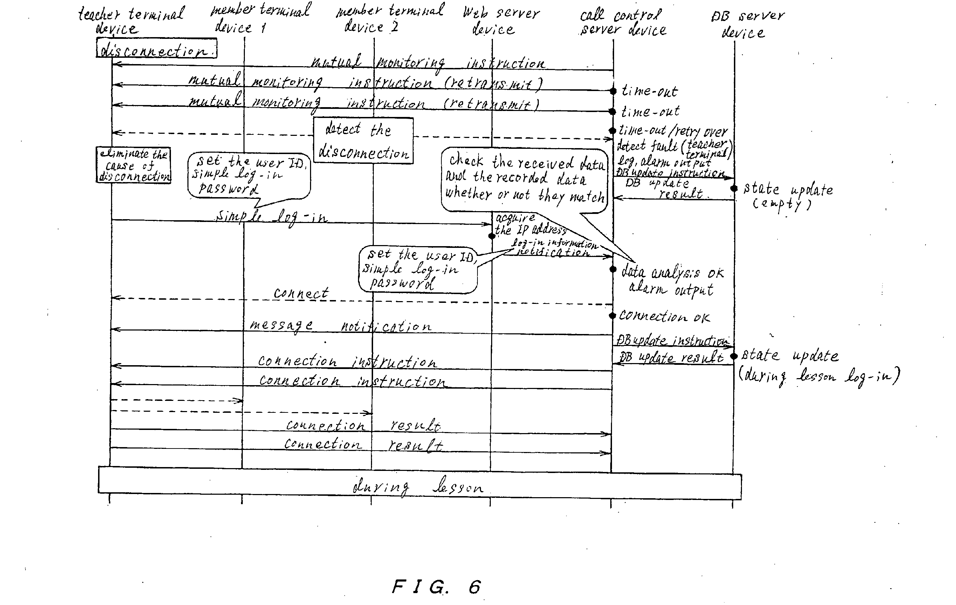

Referring next to Figs. 5, 6, description will be made on processing when any fault causes disconnection of member terminal device 2 or teacher terminal device 1 from communication network 6 during a lesson.

As described above, since the mutual monitoring instruction/result messages are exchanged every predetermined time between member terminal devices 2 which have started a lesson application and call control server device 4, call control server device 4 can detect the presence or absence of a fault between member terminal device 2 and communication network 6.

As shown in Fig. 5, if any fault causes disconnection, for example, between a first member terminal device (member terminal 1) and communication network 6, the first member terminal device cannot respond to the mutual monitoring instruction message transmitted from call control server device 4 by sending the mutual monitoring result message. In this event, call control server device 4 detects time-out after the predetermined time, and transmits again the mutual monitoring instruction message to the first member terminal device. In the example of Fig. 5, when call control server device 4 retransmits the mutual monitoring instruction message twice but the first member terminal device does not respond by sending mutual monitoring result message to the retransmitted mutual monitoring instruction message (retry over), call control server device 4 determines that the first member terminal device is disconnected from communication network 6 by any fault (disconnection). Then, call control server device 4 transmits to teacher terminal device 1 an alarm indicative of the disconnection of member terminal device 2 (log, alarm output), and transmits to DB server device 5 an update instruction (DB update instruction) for updating the member information on member terminal device 2 which has been disconnected. Upon receipt of the update instruction from call control server device 4, DB server device 5 updates the member information (state updated (empty)) in accordance with the contents of the instruction, and returns the DB update result to call control server device 4.

By thus exchanging the mutual monitoring instruction message for monitoring a connecting state, and the mutual monitoring result message between terminal devices and call control server device 4 when the terminal devices are interconnected through communication network 6, call control server device 4 can readily detect the occurrence of a fault and manage a connecting circumstance and the like, thereby preventing such a problem that the terminal device is charged even during disconnection from communication network 6. In addition, even if a member terminal device is disconnected from communication network 6, call control server device 4 can correctly measure a time for which a member actually took lessons (time for which a member could not take lessons) and therefore provide alternative services, in the event of disconnection, such as a discount of the rate in accordance with the proportion of time for which a member could not take lessons, permission given to the member to take an alternative lesson, and the like based on a contract previously made between the service provider and the member, to remove anxiety of the member and improve satisfaction of the member.

A student who was disconnected from communication network 6 during a lesson eliminates the cause of the disconnection, and again connects to communication network 6 via dialup through member terminal device 2. Upon completing the dialup connection, member terminal device 2 transmits to Web server device 3 the simple log-in password and user ID included in the information file downloaded when member terminal device 2 first logged in Web server device 3 (upon beginning a lesson), and performs simple log-in.

Web server device 3 acquires the IP address of member terminal device 2 which has performed the simple log-in, notifies call control server device 4 of the IP address, simple log-in password, and user ID as log-in information.

Call control server device 4 compares information recorded in the data accumulating unit with the transferred simple log-in password and user ID, and confirms whether or not they match. If they match (data analysis OK), call control server device 4 accesses member terminal device 2 (connect) to notify member terminal device 2 of a message indicative of connection OK. Call control server device 4 also transmits to DB server device 5 an update instruction (DB update instruction) for updating the member information of member terminal device 2 which has accessed again.

Upon receipt of the DB update instruction from call control server device 4, DB server device 5 updates the member information in accordance with the contents of the instruction (state updated (during lesson log-in)), and returns the result of update to call control server device 4.

Upon terminating the update of DB server device 5, call control server device 4 transmits a connection instruction to teacher terminal device 1 to connect to member terminal device 2 which has accessed again. Teacher terminal device 1 uses an IP address newly given to member terminal device 2 to connect to this member terminal device 2, and returns the result of connection to call control server device 4.

On the other hand, if any fault causes disconnection between teacher terminal device (teacher terminal) 1 and communication network 6, teacher terminal device 1 cannot respond to the mutual monitoring instruction message transmitted from call control server device 4 by sending the mutual monitoring result message. In this event, call control server device 4 detects time-out after the predetermined time, and transmits again the mutual monitoring instruction message to teacher terminal device 1. In the example of Fig. 6, when the call control server device 4 retransmits the mutual monitoring instruction message twice but teacher terminal device 1 does not respond to retransmitted mutual monitoring instruction message by sending the mutual monitoring result message (retry over), call control server device 4 determines that teacher terminal device 1 is disconnected from communication network 6 by any fault (disconnection). Then, call control server device 4 transmits to each member terminal device 2 an alarm indicative of the disconnection of teacher terminal device 1 (log, alarm output), and transmits to DB server device 5 an update instruction (DB update instruction) for updating the member information on teacher terminal device 1 which has been disconnected.

Upon receipt of the update instruction from call control server device 4, DB server device 5 updates the member information (state updated (empty)) in accordance with the contents of the instruction, and returns the DB update result to call control server device 4.

The teacher who was disconnected from communication network 6 during a lesson eliminates the cause of the disconnection, and again connects to communication network 6 via dialup through teacher terminal device 1. Upon completing the dialup connection, teacher terminal device 1 transmits to Web server device 3 the simple log-in password and user ID included in the information file downloaded when teacher terminal device 1 first logged in Web server device 3, and performs simple log-in.

Web server device 3 acquires the IP address of teacher terminal device 1 which has performed the simple log-in, notifies call control server device 4 of the IP address, simple log-in password, and user ID as log-in information.

Call control server device 4 compares information recorded in the data accumulating unit with the transferred simple log-in password and user ID, and confirms whether or not they match. If they match (data analysis OK), call control server device 4 accesses teacher terminal device 1 (connect) to notify teacher terminal device 1 of a message indicative of connection OK. Call control server device 4 also transmits to DB server device 5 an update instruction (DB update instruction) for updating the member information of teacher terminal device 1 which has accessed again.

Upon receipt of the DB update instruction from call control server device 4, DB server device 5 updates the member information in accordance with contents of the instruction (state updated (during lesson log-in)), and returns the result of update to call control server device 4.

Upon terminating the update of DB server device 5, call control server device 4 transmits a connection instruction to teacher terminal device 1 to connect again to respective member terminal devices 2 which are in the middle of the lesson. Teacher terminal device 1 sequentially connects to respective member terminal devices 2, and returns the result of connection to call control server device 4.

While a preferred embodiment of the present invention has been described using specific terms, such description is for illustrative purposes only, and it is to be understood that changes and variations may be made without departing from the spirit or scope of the following claims.

In summary, the invention can be described as follows: When a terminal device accesses through a communication network for the first time, a server device generates an identifier for use in reconnection of the terminal device with the communication network, and returns the identifier to the terminal device. If a connection between the terminal device and communication network is broken by a fault, the server device authenticates the terminal device using the identifier transmitted from the terminal device to recover a connection with another terminal which had been connected immediately before the terminal device was disconnected from the communication network.

## Claims

1. A network connection recovery method for recovering a connection when a fault causes disconnection of any of a plurality of terminal devices connected through a communication network, said method comprising the steps of:
generating and returning an identifier for use in reconnection of said terminal device with said communication network when said terminal device first accesses through said communication network;
instructing said terminal device to transmit said identifier, when a connection between said terminal device and said communication network is broken by a fault, after said terminal device is connected again to said communication terminal; and
authenticating said terminal device using the transmitted identifier to recover a connection with another terminal device which had been connected with said terminal device immediately before said terminal device was disconnected from said communication network.

2. The network connection recovery method according to claim 1, wherein said identifier includes information which is limited in the number of times available for use or a period available for use, or both.

3. The network connection recovery method according to claim 1 or 2, further comprising the steps of:
exchanging with each of said terminal devices a mutual monitoring instruction message for monitoring a connecting state, and a mutual monitoring result message which is a response to said mutual monitoring instruction message while said plurality of terminal devices are connected through said communication network; and
determining that said fault occurs if said terminal device does not respond to said mutual monitoring instruction message transmitted thereto by sending said mutual monitoring result message within a predetermined time, and/or if said terminal device does not respond to said mutual monitoring instruction message transmitted thereto a predetermined number of times by sending said mutual monitoring result message.

4. A network connection recovery system comprising:
a server device for generating and returning an identifier for use in reconnection of a terminal device with a communication network when said terminal device first accesses through said communication network, and authenticating said terminal device using said identifier transmitted from said terminal device, when a connection between said terminal device and said communication network is broken by a fault, to recover a connection with another terminal device which had been connected immediately before said terminal device was disconnected from said communication network; and
a terminal device connected for communication with another terminal device through said communication network, said terminal device configured to transmit said identifier to said server device, when a connection between said terminal device and said communication network is broken by a fault, after said terminal device is connected again to said communication terminal.

5. The network connection recovery system according to claim 4, wherein said identifier includes information which is limited in the number of times available for use or a period available for use, or both.

6. The network connection recovery system according to claim 4 or 5, wherein said server device:
exchanges with said terminal device a mutual monitoring instruction message for monitoring a connecting state, and a mutual monitoring result message which is a response to said mutual monitoring instruction message, while a plurality of terminal devices are connected through said communication network; and
determines that said fault occurs if said terminal device does not respond to said mutual monitoring instruction message transmitted thereto by sending said mutual monitoring result message within a predetermined time, and/or if said terminal device does not respond to said mutual monitoring instruction message transmitted thereto a predetermined number of times by sending said mutual monitoring result message.

7. A server device for performing processing for recovering a connection when a fault causes disconnection of any of a plurality of terminal devices connected through a communication network, said server device comprising:
a processing unit for generating and returning an identifier for use in reconnection of said terminal device with said communication network when said terminal device first accesses through said communication network, and authenticating said terminal device using said identifier transmitted from said terminal device, when a connection between said terminal device and said communication network is broken by a fault, to recover a connection with another terminal device which had been connected immediately before said terminal device was disconnected from said communication network; and
a data accumulating unit for holding said identifier generated for each said terminal device.

8. The server device according to claim 7, wherein said identifier includes information which is limited in the number of times available for use or a period available for use, or both.

9. The server device according to claim 7 or 8, wherein said processing unit:
exchanges with said terminal device a mutual monitoring instruction message for monitoring a connecting state, and a mutual monitoring result message which is a response to said mutual monitoring instruction message, while said plurality of terminal devices are connected through said communication network; and
determines that said fault occurs if said terminal device does not respond to said mutual monitoring instruction message transmitted thereto by sending said mutual monitoring result message within a predetermined time, and/or if said terminal device does not respond to said mutual monitoring instruction message transmitted thereto a predetermined number of times by sending said mutual monitoring result message.

10. A program for causing a computer to execute processing for recovering a connection when a fault causes disconnection of any of a plurality of terminal devices connected through a communication network, said program causing a computer to execute the processing steps of:
generating and returning an identifier for use in reconnection of said terminal device with said communication network when said terminal device first accesses through said communication network; and
authenticating said terminal device using said identifier transmitted from said terminal device, when a connection between said terminal device and said communication network is broken by a fault, to recover a connection with another terminal device which had been connected immediately before said terminal device was disconnected from said communication network.

11. The program according to claim 10, wherein said identifier includes information which is limited in the number of times available for use or a period available for use, or both.

12. The program according to claim 10 or 11, further causing a computer to execute the processing steps of:
exchanging with said terminal device a mutual monitoring instruction message for monitoring a connecting state, and a mutual monitoring result message which is a response to said mutual monitoring instruction message, while said plurality of terminal devices are connected through said communication network; and
determining that said fault occurs if said terminal device does not respond to said mutual monitoring instruction message transmitted thereto by sending said mutual monitoring result message within a predetermined time, and/or if said terminal device does not respond to said mutual monitoring instruction message transmitted thereto a predetermined number of times by sending said mutual monitoring result message.

13. A recording medium having recorded thereon a program for causing a computer to execute processing for recovering a connection when a fault causes disconnection of any of a plurality of terminal devices connected through a communication network, said program causing a computer to execute the processing steps of:
generating and returning an identifier for use in reconnection of said terminal device with said communication network when said terminal device first accesses through said communication network; and
authenticating said terminal device using said identifier transmitted from said terminal device, when a connection between said terminal device and said communication network is broken by a fault, to recover a connection with another terminal device which had been connected immediately before said terminal device was disconnected from said communication network.

14. The recording medium according to claim 13, wherein said identifier includes information which is limited in the number of times available for use or a period available for use, or both.

15. The recording medium according to claim 13 or 14, wherein said program causes a computer to execute the processing steps of:
exchanging with said terminal device a mutual monitoring instruction message for monitoring a connecting state, and a mutual monitoring result message which is a response to said mutual monitoring instruction message, while said plurality of terminal devices are connected through said communication network; and
determining that said fault occurs if said terminal device does not respond to said mutual monitoring instruction message transmitted thereto by sending said mutual monitoring result message within a predetermined time, and/or if said terminal device does not respond to said mutual monitoring instruction message transmitted thereto a predetermined number of times by sending said mutual monitoring result message.

16. A network connection recovery system for recovering a connection when a fault causes disconnection of any of a plurality of terminal devices connected through a communication network, wherein:
said system comprises a server device for generating and transmitting an identifier for use in reconnection to said communication network when said terminal device first accesses through said communication network,
said terminal device transmits said identifier when a connection is broken between said terminal device and said communication network, and
said server device authenticates said terminal device using said transmitted identifier, when said identifier is transmitted from said terminal device, to recover a connection with other terminal devices which had been connected immediately before said terminal device was disconnected from said communication network.
